# EUROPEAN PATENT APPLICATION

(11) **EP 4 366 040 A1**
(43) Date of publication of application: **08.05.2024**
(21) Application number: 23194193.1
(22) Date of filing: 30.08.2023
(51) Int. Cl.: H01M 50/103, H01M 50/15, H01M 50/176, H01M 50/209, H01M 50/51, H01M 50/516, H01M 50/548, H01M 50/553, H01M 50/557

(54) **SECONDARY BATTERY AND BATTERY MODULE INCLUDING THE SAME**

(30) Priority: 03.11.2022 KR 20220145043
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(57) **Abstract**

A secondary battery (200, 200') includes: an electrode assembly (110) including a first electrode tab (111a) and a second electrode tab (112a) exposed at opposite sides of the electrode assembly (110); a case (160) accommodating the electrode assembly (110) and having a side-opening (161, 162) at opposite sides thereof; a first cap plate (171) sealing a one side-opening (161, 162) in the case (160); a first terminal (130, 230) electrically connected to the first electrode tab (111a), exposed to the outside of the first cap plate (171), and having a first protrusion (133y, 233y) that protrudes outwardly; a second cap plate (181) sealing the other side-opening (161, 162) in the case (160); and a second terminal (150, 150', 250, 250') electrically connected to the second electrode tab (112a), exposed to the outside of the second cap plate (181), and having a second protrusion (153y', 253y, 253y') that protrudes outwardly. A battery module (10, 20) includes secondary batteries (200, 200') having outer surfaces (133o) of the first terminal (130, 230) of one secondary battery (200, 200') and the second terminal (150, 150', 250, 250') of another secondary battery (200, 200') welded to each other.

## Description

### BACKGROUND

### 1. Field

Aspects of embodiments of the present invention relate to a secondary battery and a battery module including the same.

### 2. Description of the Related Art

A secondary (or rechargeable) battery is a power storage system (or device) that provides excellent energy density and is configured to convert electrical energy into chemical energy and store the same. Compared to non-rechargeable (or primary) batteries, secondary batteries are designed to be recharged and are widely used in IT devices, such as smart phones, cellular phones, notebooks, and tablet PCs. Recently, interest in electric vehicles has increased to prevent environmental pollution, and accordingly, high-capacity secondary batteries are being adopted for electric vehicles. Such secondary batteries should have certain characteristics, such as high density, high power, and stability.

A secondary battery may be manufactured to have a large size and/or a long length along one direction to provide high power, but the size and length can only be increased so far. To this end, the capacity of the secondary battery can be increased by connecting two secondary batteries together in series, but an additional bus bar must be used to connect the two secondary batteries, resulting in increased resistance and a complicated manufacturing or assembly process.

The above information disclosed in this Background section is for enhancement of understanding of the background of the present invention, and therefore, it may contain information that does not constitute prior art.

### SUMMARY

Embodiments of the present invention provide two secondary batteries having terminals that are coupled to each other by direct welding in face-to-face orientation without separate parts for electrical connection therebetween to reduce electrical contact resistance . Embodiments of the present invention also provide a battery module including the second battery.

A secondary battery includes: an electrode assembly including a first electrode tab and a second electrode tab exposed at opposite sides of the electrode assembly; a case accommodating the electrode assembly and having a side-opening at opposite sides thereof; a first cap plate sealing a one side-opening in the case; a first terminal electrically connected to the first electrode tab and exposed to the outside of the first cap plate, the first terminal having a first protrusion that protrudes outwardly; a second cap plate sealing the other side-opening in the case; and a second terminal electrically connected to the second electrode tab and exposed to the outside of the second cap plate, the second terminal having a second protrusion that protrudes outwardly.

The first terminal may include: a first inner terminal plate under the first cap plate; a first outer terminal plate over the first cap plate and having a plate-shaped first main body and the first protrusion protruding outwardly from the first main body; and a first terminal pillar rivet-coupled to the first inner terminal plate from under the first cap plate and extending through the first cap plate and coupled to the first outer terminal plate from over the first cap plate by rivet-coupling and/or welding.

The first outer terminal plate may be made of the same metal as the second terminal and may be made of a different metal than the first inner terminal plate.

The second terminal may include: a second inner terminal plate under the second cap plate; a second outer terminal plate over the second cap plate and having a plate-shaped second main body and the second protrusion protruding outwardly from the second main body; and a second terminal pillar coupled to the second inner terminal plate by riveting and/or welding from under the second cap plate, extending through the second cap plate, and coupled to the second outer terminal plate by riveting and/or welding from over the second cap plate.

The second inner terminal plate, the second outer terminal plate, and the second terminal pillar may be made of the same metal.

The first protrusion may be at the center of the first outer terminal plate in a first direction, the second protrusion may be at the center of the second outer terminal plate in the first direction, and the first direction may be a longitudinal direction of the first cap plate and the second cap plate.

The first protrusion may have a smaller length in the first direction than the first outer terminal plate and a length in a second direction equal to the first outer terminal plate, and the second protrusion may have a smaller length in the first direction than the second outer terminal plate and a length in the second direction equal to the second outer terminal plate. The second direction may be a widthwise direction of the first cap plate and the second cap plate and may be perpendicular to the first direction.

In the first outer terminal plate and the second outer terminal plate, the first main body and the second main body may extend beyond both sides in a first direction from the first protrusion and the second protrusion.

The first protrusion and the second protrusion may extend in a first direction so that the lengths thereof in the first direction are equal to or smaller than those of the first outer terminal plate and the second outer terminal plate. The first direction may be a longitudinal direction of the first cap plate and the second cap plate.

The first protrusion and the second protrusion may be at the center of the first outer terminal plate and the second outer terminal plate in a second direction, respectively, and the second direction may be a widthwise direction of the first cap plate and the second cap plate.

In the first outer terminal plate and the second outer terminal plate, the first main body and the second main body may extend beyond both sides in a second direction from the first protrusion and the second protrusion.

The secondary battery may further include: a first current collector electrically connecting the first electrode tab and the first terminal; and a second current collector electrically connecting the second electrode tab and the second terminal.

A battery module may include a plurality of the secondary batteries as described above. First and second ones of the secondary batteries may be connected to each other in series by welding in a state in which outer surfaces of the first terminal of the first one of the secondary batteries and the second terminal of the second one of the secondary batteries are in contact with each other.

The first terminal of the first one of the secondary batteries may include a first outer terminal plate exposed to outside of the first cap plate, and the second terminal of the second one of the secondary batteries may include a second outer terminal plate exposed to outside of the second cap plate.

The first outer terminal plate may include a flat plate-shaped first main body and the first protrusion protruding outwardly from the first main body, and the second outer terminal plate may include a flat plate-shaped second main body and the second protrusion protruding outwardly from the second main body.

The first protrusion and the second protrusion may be coupled to each other by welding in a state in which the second protrusion of the second outer terminal plate of the second one of the secondary batteries is in contact with the first protrusion of the first outer terminal plate of the first one of the secondary batteries.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIGS. 1A and 1B are a perspective view and a partially enlarged view of a battery module according to an embodiment of the present invention.

FIGS. 2A to 2C are a perspective view, a cross-sectional view, and an exploded perspective view of a secondary battery of the battery module shown in FIGS. 1A and 1B.

FIGS. 3A and 3B are a perspective view and a partially enlarged plan view of a battery module according to an embodiment of the present invention.

FIGS. 4A and 4B are a perspective view and a cross-sectional view of a secondary battery of the battery module shown in FIGS. 3A and 3B.

FIGS. 5A and 5B are enlarged perspective views of various embodiments of an outer terminal plate of the secondary battery shown in FIGS. 4A and 4B.

### DETAILED DESCRIPTION

Hereinafter, embodiments of the present invention will be described, in detail, with reference to the accompanying drawings.

Embodiments of the present invention are provided to more fully describe the present invention to those skilled in the art, and the following embodiments may be embodied in many different forms, and neither the embodiments described herein nor the present invention should be construed as being limited to the embodiments set forth herein. Rather, these example embodiments are provided so that this disclosure will be thorough and complete and will convey the aspects and features of the present invention to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Embodiments of the present invention will be described, in detail, with reference to the accompanying drawings to the extent that those skilled in the art can easily practice the present invention.

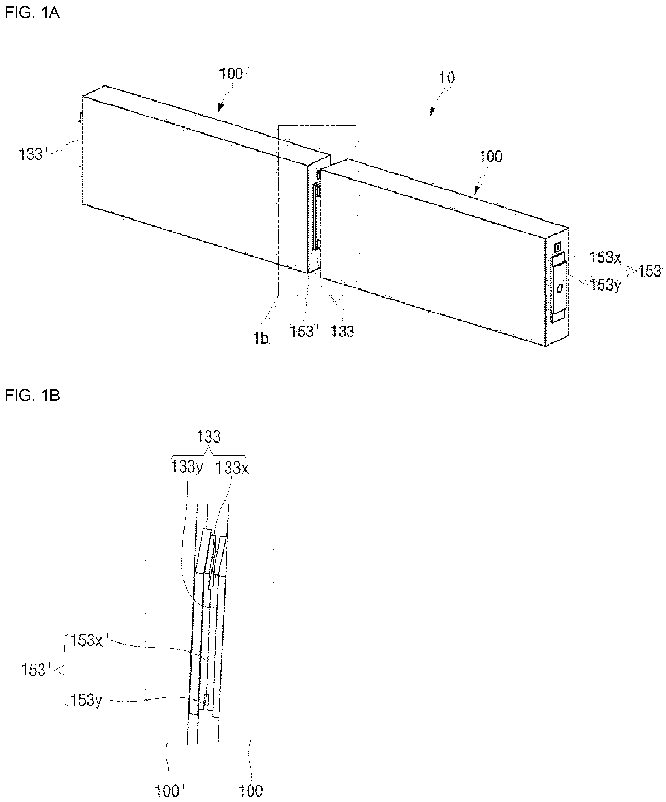

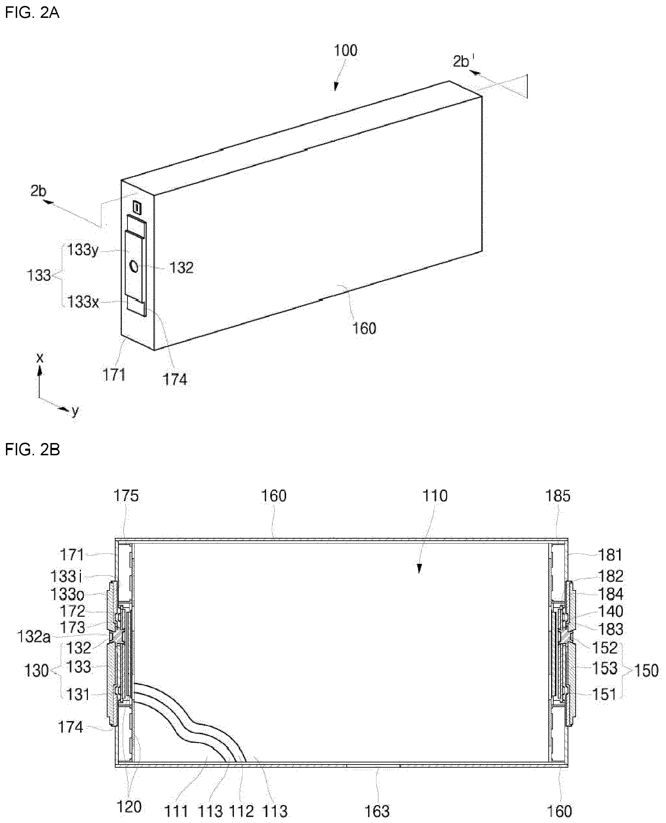

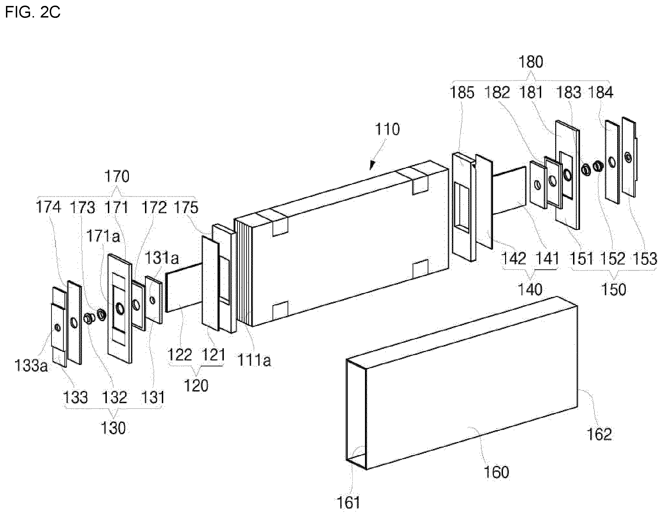

Referring to FIGS. 1A and 1B, a perspective view and a partially enlarged view of a battery module according to an embodiment of the present invention are shown. In the battery module 10, two secondary batteries 100 may be electrically connected. The two secondary batteries 100 may be connected to each other in series. In one embodiment, the two secondary batteries 100 included in the battery module 10 may have the same structure. Referring to FIG. 2A, a perspective view of the secondary battery 100 is shown, referring to FIG. 2B, a cross-sectional view of the secondary battery 100 taken along the line 2b-2b' of FIG. 2A is shown, and referring to FIG. 2C, an exploded perspective view of the secondary battery 100 shown in FIG. 2A is shown.

Hereinafter, the battery module 10 will be described with reference to FIGS. 1A, 1B, 2A, 2B, and 2C.

The secondary battery 100 may include an electrode assembly 110, a first current collector 120, a first terminal 130, a second current collector 140, a second terminal 150, a case 160, a first cap assembly 170, and a second cap assembly 180.

The electrode assembly 110 may be formed by winding or stacking a stack of a first electrode plate 111, a separator 113, and a second electrode plate 112, which are formed in a thin plate shape or a film shape. When the electrode assembly 110 is a wound stack, the winding axis may be parallel to the longitudinal direction of the case 160 (e.g., a direction perpendicular to the longitudinal directions of the first cap assembly 170 and the second cap assembly 180). In some embodiments, the electrode assembly 110 may be a stack type rather than a winding (or wound) type, and the shape of the electrode assembly 110 is not limited in the present invention. In addition, one or more electrode assemblies 110 may be stacked such that long sides of the electrode assemblies 110 are adjacent to each other and accommodated inside the case 160, but the number of electrode assemblies 110 is not limited in the present invention.

The first electrode plate 111 of the electrode assembly 110 may act as a negative electrode, and the second electrode plate 112 may act as a positive electrode. However, the reverse is also possible.

The first electrode plate 111 is formed by applying a first electrode active material, such as graphite or carbon, to a first electrode current collector formed of a metal foil, such as copper, a copper alloy, nickel, or a nickel alloy, and may have a first electrode tab 111a (e.g., a first uncoated portion), which is a region of the first electrode current collector that is not coated with the first electrode active material. The first electrode tab 111a may act as a passage for current flow between the first electrode plate 111 and the first terminal 130.

In some embodiments, the first electrode tab 111a may be formed by cutting the first electrode plate 111 to protrude from one side of the electrode assembly 110 in advance when manufacturing the first electrode plate 111 and may be integrally formed with the first electrode plate 111. In some embodiments, the first uncoated portion of the first electrode plate 111 may protrude further to one side than (e.g., may protrude beyond) the separator 113 without being separately cut.

The first electrode tab 111a, which is an uncoated portion of the first electrode plate 111 exposed to one side of the electrode assembly 110, is coupled to the first current collector 120 by welding. In other embodiments, the first terminal 130 may be directly coupled to the first electrode tab 111a by welding.

The second electrode plate 112 is formed by applying a second electrode active material, such as a transition metal oxide, to a second electrode current collector formed of a metal foil, such as aluminum or an aluminum alloy, and may have a second electrode tab 112a (e.g., a second uncoated portion), which is a region of the second electrode plate 112 that is not coated with the second electrode active material. In some embodiments, the second electrode tab 112a may be formed by cutting the second electrode plate 112 to protrude from another side of the electrode assembly 110 in advance when manufacturing the second electrode plate 112 and may be integrally formed with the second electrode plate 112. In some embodiments, the second uncoated portion of the second electrode plate 112 may protrude more toward the other side than (e.g., may protrude beyond) the separator 113 without being separately cut. The second electrode tab 112a, which is an uncoated portion of the second electrode plate 112 exposed to the other side of the electrode assembly 110, is coupled to the second current collector 140 by welding. In other embodiments, the second terminal 150 may be directly coupled to the second electrode tab 112a by welding.

In some embodiments, the first electrode tab 111a may be positioned on the left side of the electrode assembly 110, and the second electrode tab 112a may be positioned on the right side of the electrode assembly 110. As used herein, the left and right sides are referred to for convenience of description based on the secondary battery 100 as shown in FIGS. 2A to 2C, and the positions or orientation of the secondary battery 100 may be changed, for example, when the secondary battery 100 is rotated left and right or up and down. Hereinafter, various components will be described based on the secondary battery 100 as shown in FIGS. 2A to 2C.

In some embodiments, the separator 113 is positioned between the first electrode plate 111 and the second electrode plate 112 to prevent a short circuit while enabling the movement of lithium ions. The separator 113 may include polyethylene, polypropylene, or a composite film of polyethylene and polypropylene. In some embodiments, an inorganic solid electrolyte, such as a sulfide, oxide, or phosphate compound that does not require a liquid or gel electrolyte, may be used in place of the separator 113.

The first electrode tab 111a of the first electrode plate 111 and the second electrode tab 112a of the second electrode plate 112 are respectively positioned at both ends (e.g., are positioned at opposite ends) of the electrode assembly 110. In some embodiments, the electrode assembly 110 may be accommodated in the case 160 together with an electrolyte. In some embodiments, the electrolyte may include a lithium salt, such as LiPF₆ and LiBF₄, in an organic solvent, such as EC, PC, DEC, EMC, or DMC. The electrolyte may be in a liquid or gel state. In embodiments including an inorganic solid electrolyte, the electrolyte (e.g., the liquid or gel state electrolyte) may be omitted.

The first current collector 120 is made of a metal and may electrically connect the first electrode plate 111 and the first terminal 130 to each other. The first current collector 120 is a metal plate that can be easily bent and has one side 121 in contact with and coupled to the first electrode tab 111a of the electrode assembly 110 by welding and another side (e.g., an opposite side) 122 in contact with and coupled to the first terminal 130 by welding. The first current collector 120 may be made of copper or a copper alloy.

The first terminal 130 is formed of a metal and may be in contact with and welded to the other side 122 of the first current collector 120 to be electrically connected thereto. In some embodiments, the first terminal 130 may include a first inner terminal plate 131, a first terminal pillar 132, and a first outer terminal plate 133.

The first inner terminal plate 131 may be positioned inside (or under) a first cap plate 171, to be described below, and the first outer terminal plate 133 may be positioned outside (or over) the first cap plate 171. The first terminal pillar 132 penetrates (or extend through) the first cap plate 171 and is coupled to the first outer terminal plate 133 from the outside of the first cap plate 171 and to the first inner terminal plate 131 from the inside of the first cap plate 171.

A first inner insulating member 172 may be interposed between the first inner terminal plate 131 and the first cap plate 171, and a first outer insulating member 174 may be interposed between the first outer terminal plate 133 and the first cap plate 171. A first seal gasket 173 may be interposed between the first terminal pillar 132 and the first cap plate 171 (e.g., an opening in the first cap plate 171 through which the first terminal pillar 132 passes) to seal the space between the first terminal 130 and the first cap plate 171.

The first inner terminal plate 131 may be in contact with and coupled to the other side 122 of the first current collector 120 on one side positioned on the right side. The first inner terminal plate 131 may have a terminal hole (e.g., terminal opening) 131a penetrating (or extending) between one side and the other side. The terminal hole 131a may be formed to correspond to the diameter of the first terminal pillar 132. The terminal hole 131a may be positioned approximately at the center of the first inner terminal plate 131.

The first terminal pillar 132 may be inserted and coupled to the terminal hole 131a in the first inner terminal plate 131. For example, the first terminal pillar 132 may be riveted and fixed from one side in a state of being (e.g., while being) inserted into the terminal hole 131a in the first inner terminal plate 131. The first current collector 120 may be coupled to one surface of the first inner terminal plate 131 coupled to the first terminal pillar 132 by welding. The first inner terminal plate 131 may be made of a metal, such as copper or a copper alloy, similar to the first current collector 120. In one embodiment, the first inner terminal plate 131 is made of the same metal as the first current collector 120 and may be easily welded to the first current collector 120.

The first terminal pillar 132 has a pillar shape and may protrude and extend to the outside of the first cap plate 171. In addition, the first terminal pillar 132 may have a flange 132a formed outside the first cap plate 171 to prevent the first terminal pillar 132 from falling out of (or falling through) the first cap plate 171. The first terminal pillar 132 may be inserted into a terminal hole (e.g., terminal opening) 133a in the first outer terminal plate 133 from the outside around the first cap plate 171 and may be inserted into the terminal hole 131a in the first inner terminal plate 131 from the inside around the first cap plate 171. Here, the flange 132a of the first terminal pillar 132 may be positioned between the first outer terminal plate 133 and the first cap plate 171.

The first outer terminal plate 133 may have the terminal hole 133a penetrating (or extending) between one surface and the other surface. The terminal hole 133a may be positioned approximately at the center of the first outer terminal plate 133. One surface of the first outer terminal plate 133 may be an outer surface 133o and the other surface may be an inner surface 133i. The inner surface 133i may be a surface that faces the first cap plate 171 and is in contact with the first outer insulating member 174 interposed between the first cap plate 171 and the first outer terminal plate 133, and the outer surface 133o may be a surface opposite to the inner surface 133i and that faces the outside of the secondary battery 100.

The first outer terminal plate 133 may have a flat plate-shaped first main body 133x and a first protrusion 133y protruding outwardly from an approximate center of the first main body 133x. The first protrusion 133y may be positioned at the center of the first main body 133x in a first direction (e.g., the x direction), which is the longitudinal direction of the first cap plate 171, on the outer surface 133o of the first outer terminal plate 133. In the first outer terminal plate 133, the first protrusion 133y is positioned at the center of the first main body 133x in the first direction on the outer surface 133o, and the first main body 133x is positioned on (or extends from) both sides of the first protrusion 133y. In some embodiments, the length of the first protrusion 133y in a second direction (e.g., the y direction), which is the widthwise direction of the first cap plate 171, may be equal to that of the first main body 133x. An outer surface of the first protrusion 133y may be flat, and the inner surface 133i of the first outer terminal plate 133 may also be flat.

An outer extension part of the first terminal pillar 132 may be inserted and coupled to the terminal hole 133a in the first outer terminal plate 133. The terminal hole 133a may pass through the first protrusion 133y positioned at the center of the first outer terminal plate 133. The first terminal pillar 132 is inserted into the terminal hole 133a in the first outer terminal plate 133 from the outside of the first cap plate 171 and is fixed by riveting or/or welding on the outer surface positioned on the left side. One side of the first outer terminal plate 133 is positioned on the right side and may face the outer surface of the first cap plate 171. In some embodiments, the first outer insulating member 174, made of an insulating material, may be interposed between one surface of the first outer terminal plate 133 and the outer surface of the first cap plate 171 for insulation.

In the first terminal 130, the first outer terminal plate 133 may be made of the same metal as the second terminal 150. The first outer terminal plate 133 may be made of aluminum or an aluminum alloy. In addition, the first terminal pillar 132 may be made of the same metal as the first outer terminal plate 133. For example, the first terminal pillar 132 may be riveted and coupled to the first inner terminal plate 131 even through the first inner terminal plate 131 and the first terminal pillar 132 are made of different metals. In the first terminal 130, the first outer terminal plate 133 and the first terminal pillar 132 may be exposed and protrude to the outside of the first cap plate 171. In addition, the first inner terminal plate 131 may be electrically connected to the first current collector 120 inside the first cap plate 171.

Here, one surface of the first inner terminal plate 131 may face the left side of the electrode assembly 110. Of course, the first current collector 120 is interposed between the one surface of the first inner terminal plate 131 and the left side surface of the electrode assembly 110, and thus the first terminal 130 and the first electrode tab 111a of the electrode assembly 110 may be electrically connected.

The second current collector 140 is formed of a metal and may electrically connect the second electrode plate 112 and the second terminal 150 to each other. The second current collector 140 is a metal plate that can be easily bent. One side of the second current collector 140 is in contact with and coupled, by welding, to the second electrode tab 112a of the electrode assembly 110, and the other side of the second current collector 140 is in contact with and coupled, by welding, to the second terminal 150. The second current collector 140 may be coupled to the electrode assembly 110 and the second terminal 150 in a symmetrical arrangement and form as the first current collector 120 based on the electrode assembly 110. In addition, the second current collector 140 may be made of aluminum or an aluminum alloy.

The second terminal 150 is made of a metal and may be electrically connected to the second current collector 140. In some embodiments, the second terminal 150 may include a second inner terminal plate 151, a second terminal pillar 152, and a second outer terminal plate 153.

The second inner terminal plate 151 may be positioned inside (or under) a second cap plate 181, and the second outer terminal plate 153 may be positioned outside (or over) the second cap plate 181. A second inner insulating member 182 may be interposed between the second inner terminal plate 151 and the second cap plate 181, and a second outer insulating member 184 may be interposed between the second outer terminal plate 153 and the second cap plate 181. In addition, a second seal gasket 183 may be interposed between the second terminal pillar 152 and the second cap plate 181. The second terminal pillar 152 penetrates (or extends through) the second cap plate 181 and is coupled to the second outer terminal plate 153 from the outside of the second cap plate 181 and to the second inner terminal plate 151 from the inside of the second cap plate 181.

The second terminal 150 may be the same as the first terminal 130 in terms of shape and structure. Further, the second terminal 150 may be coupled to the electrode assembly 110 through the second current collector 140 in a symmetrical manner and form as the first terminal 130 based on the electrode assembly 110. In addition, in the second terminal 150, the second inner terminal plate 151, the second terminal pillar 152, and the second outer terminal plate 153 may all be made of aluminum or an aluminum alloy. Accordingly, the second terminal pillar 152 may be coupled to the second inner terminal plate 151 by riveting and/or welding and may be coupled to the second outer terminal plate 153 by riveting and/or welding.

The case 160 has a substantially hollow rectangular parallelepiped shape having openings 161 and 162 formed at both sides (e.g., at opposite sides). The electrode assembly 110, coupled to the first current collector 120 and the second current collector 140, may be inserted into the case 160 through one or both of the openings 161 and 162.

The case 160 may have rectangular upper and lower surfaces extending in the longitudinal direction of the case 160 and two rectangular long side surfaces connecting (or extending between) the long sides of the upper and lower surfaces and extending in the longitudinal direction. The upper surface, the lower surface, and the two long side surfaces of the case 160 may be integrally formed. The case 160 may have a vent hole (e.g., a vent opening) passing through the upper or lower surface. A safety vent 163 may be installed in the vent hole in the case 160. The safety vent 163 may have a notch so that the safety vent 163 opens (or bursts) at a set pressure due to it having a smaller thickness than other regions of the case 160.

The first cap assembly 170 may be coupled to the left opening 161 in the case 160. In some embodiments, the first cap assembly 170 may include the first cap plate 171, the first inner insulating member 172, the first seal gasket 173, the first outer insulating member 174, and a first insulating member 175. The first cap plate 171 has a flat rectangular plate shape and may seal the left opening 161 in the case 160. The first cap plate 171 may have a terminal hole (e.g., terminal opening) 171a penetrating (or extending) between an outer surface and an inner surface thereof. The first terminal pillar 132 may penetrate (or extend through) the terminal hole 171a in the first cap plate 171 to be coupled to the first cap plate 171. In addition, the first terminal pillar 132 may be coupled to the first outer terminal plate 133 from the outside of the first cap plate 171 and to the first inner terminal plate 131 from the inside of the first cap plate 171. The first inner terminal plate 131 and a partial region of the right side of the first terminal pillar 132 may be positioned inside the case 160.

The first inner insulating member 172 may be interposed between the inner surface of the first cap plate 171 and the first inner terminal plate 131. The first inner insulating member 172 may be in close contact with the inner surface of the first cap plate 171 and may also be in close contact with the first seal gasket 173. The first inner insulating member 172 may be made of an insulating material and may insulate the first cap plate 171 and the first inner terminal plate 131 from each other.

The first seal gasket 173, made of an insulating material, may be provided between the first cap plate 171 and the first terminal pillar 132 to seal the space between the first cap plate 171 and the first terminal pillar 132. For example, the first seal gasket 173 may be interposed between the first cap plate 171 and the first terminal pillar 132. The first seal gasket 173 may prevent external moisture from penetrating into the secondary battery 100 and/or may prevent an electrolyte contained in the secondary battery 100 from leaking to the outside. One side of the first seal gasket 173 may be in contact with the first outer insulating member 174 and the other side may be in contact with the first inner insulating member 172.

In addition, the first outer insulating member 174 may be interposed between the outer surface of the first cap plate 171 and the first outer terminal plate 133. The first outer insulating member 174 may be in close contact with the first cap plate 171 and may also be in close contact with the flange 132a of the first terminal pillar 132. The first inner insulating member 172 may be made of an insulating material and may insulate the first cap plate 171 and the first outer terminal plate 133 from each other.

In some embodiments, the first cap plate 171 may be electrically separated from the first terminal 130 by the first inner insulating member 172, the first seal gasket 173, and the first outer insulating member 174.

In addition, the first insulating member 175 may be interposed between the first cap plate 171 and the electrode assembly 110. The first insulating member 175 may be made of an insulating material and may prevent the electrode assembly 110 from moving and may prevent one side of the electrode assembly 110 from electrically contacting the first cap plate 171.

In addition, after the electrode assembly 110 to which the first current collector 120 is coupled is accommodated in the case 160, the first cap plate 171, coupled to the first terminal 130, may seal the opening 161 in the case 160. Before the first cap plate 171 seals the case 160, the one side 121 of the first current collector 120 and the first inner terminal plate 131 of the first terminal 130 may be coupled to each other by welding.

The second cap assembly 180 may be coupled to the right opening 162 in the case 160. In some embodiments, the second cap assembly 180 may include the second cap plate 181, the second inner insulating member 182, the second seal gasket 183, the second outer insulating member 184, and the second insulating member 185. The second cap assembly 180 may be the same as the first cap assembly 170 in terms of shape and structure. In addition, the coupling shape and structure between the second cap assembly 180 and the second terminal 150 may be the same as that between the first cap assembly 170 and the first terminal 130. However, the coupling shape of the second cap assembly 180 and the second terminal 150 may be symmetrical to the coupling shape of the first cap assembly 170 and the first terminal 130 with respect to the case 160.

In the secondary battery 100, the first cap assembly 170, coupled to the first terminal 130, is coupled to a one side-opening (e.g., the left opening 161) in the case 160, and the second cap assembly 180 coupled to the second terminal 150 is coupled to the other side-opening (e.g., the right opening 162) in the case 160. Thus, the first terminal 130 and the second terminal 150 may be located on both sides (e.g., on opposite sides) of the case 160.

In addition, in the secondary battery 100, the first outer terminal plate 133 of the first terminal 130 and the second outer terminal plate 153 of the second terminal 150 may be made of the same metal. In addition, in the battery module 10, two secondary batteries 100 may be electrically connected to each other in series. In one embodiment, the two secondary batteries 100 included in the battery module 10 may have the same structure. For convenience of description, one secondary battery in the battery module 10 will be referred to as the first secondary battery 100 and the other secondary battery will be described as the second secondary battery 100'.

In the battery module 10 in which the two secondary batteries 100 and 100' are connected to each other in series, the two secondary batteries 100 and 100' may be connected in series by direct welding in a state in which the outer surface of the first outer terminal plate 133 of the first terminal 130 of the first secondary battery 100 is in contact with the outer surface of the second outer terminal plate 153' of the second terminal 150' of the second secondary battery 100'. For example, in the battery module 10, the first secondary battery 100 and the second secondary battery 100' may be electrically coupled to each other by welding in a state in which the planar outer surface of the first protrusion 133y of the first outer terminal plate 133 of the first secondary battery 100 is in face-to-face contact with the planar outer surface of the second protrusion 153y' of the second outer terminal plate 153' of the second secondary battery 100'.

In the battery module 10, the outer surfaces of the first protrusion 133y of the first secondary battery 100 and the second protrusion 153y' of the second secondary battery 100' have macroscopically flat surfaces but microscopically rough surfaces. Therefore, as the area in which the first protrusion 133y of the first outer terminal plate 133 and the second protrusion 153y' of the second outer terminal plate 153' are coupled to each other by welding increases, the rough surfaces may be filled by welding, thereby reducing electrical contact resistance therebetween. That is, the battery module 10 may have reduced contact resistance by increasing the welding area between the two secondary batteries 100 and 100'.

In addition, the battery module 10 has two secondary batteries 100 connected to each other in series and having first terminals 130 and second terminals 150 on both sides, respectively, and thus, when a plurality of battery modules 10 are coupled in the form of a pack, cooling members may be coupled to upper and lower regions of the case(s) 160 to reduce deterioration of the battery module 10 and improve cooling performance. As an example, the battery pack may electrically connect first terminals and/or second terminals, respectively exposed to both sides, in a state in which the long sides of the plurality of battery modules 10 face each other.

In addition, the battery module 10 is provided with a first terminal 130 and a second terminal 150 on both sides, respectively, and thus, when a plurality of battery modules 10 are coupled together in the form of a pack, the charge and discharge current flows along each terminal in both directions, thereby suppressing deterioration of the secondary batteries 100 compared to when two terminals are provided on one side and the charge/discharge current flows along the two terminals on the one side. In addition, when a plurality of battery modules 10 are coupled in the form of a pack, the respective terminals can be connected in both directions, and thus, space utilization is increased.

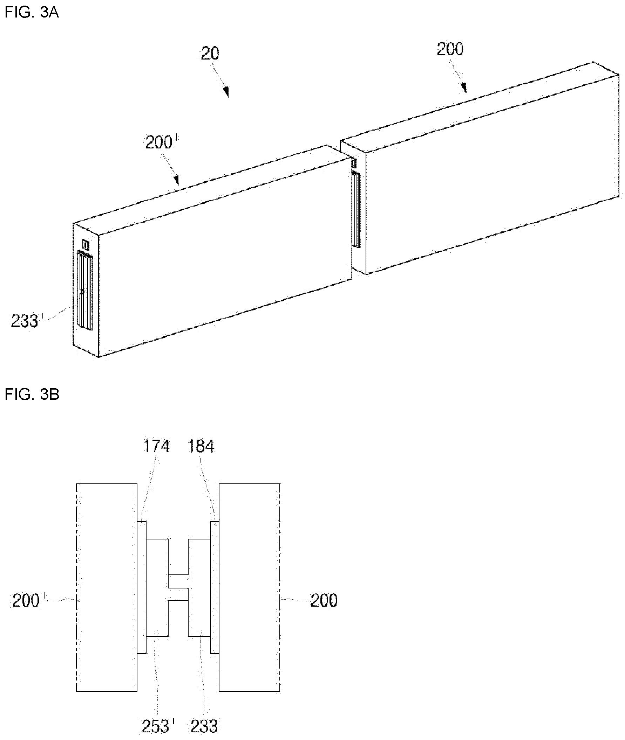

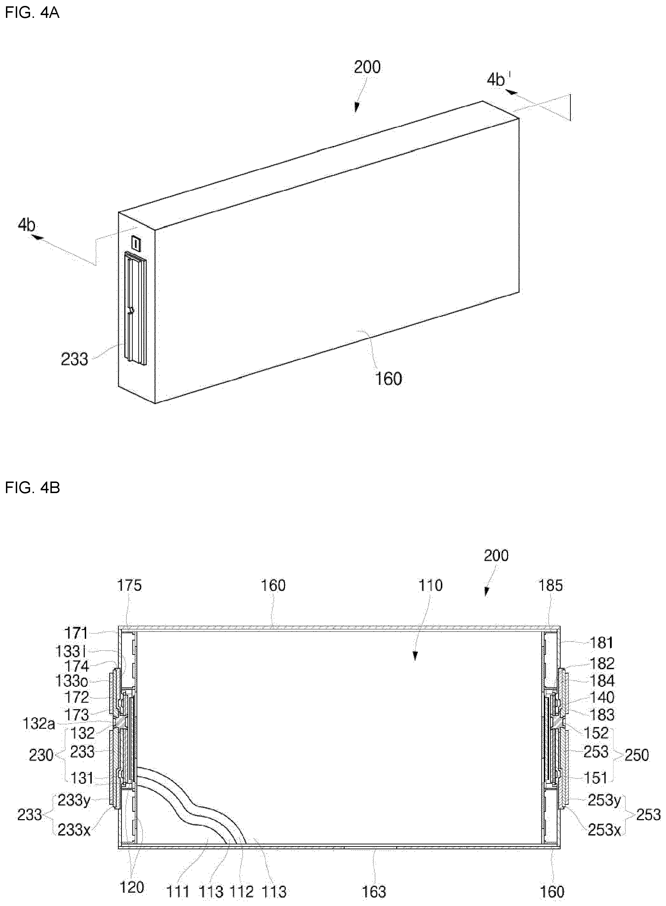

Referring to FIGS. 3A and 3B, a perspective view and a partially enlarged plan view of a battery module according to another embodiment of the present invention are shown. The battery module 20 has two secondary batteries 200 connected to each other in series. The two secondary batteries 200 included in the battery module 20 may have the same structure. Referring to FIGS. 4A and 4B, perspective and cross-sectional views of the secondary battery 200 are shown.

The secondary battery 200 may include an electrode assembly 110, a first current collector 120, a first terminal 230, a second current collector 140, a second terminal 250, a case 160, and a first cap assembly 170, and a second cap assembly 180. The first terminal 230 may include a first inner terminal plate 131, a first terminal pillar 132, and a first outer terminal plate 233, and the second terminal 250 may include a second inner terminal plate 151, a second terminal pillar 152, and a second outer terminal plate 253.

The secondary battery 200 shown in FIGS. 4A and 4B may be the same as the secondary battery 100 shown in FIGS. 2A to 2C in terms of the electrode assembly 110, the first current collector 120, the second current collector 140, the case 160, the first cap assembly 170, and the second cap assembly 180. In addition, the secondary battery 200 shown in FIGS. 4A and 4B may be the same as the secondary battery 100 shown in FIGS. 2A to 2C in terms of a first inner terminal plate 131 and a first terminal pillar 132 of the first terminal 230, and a second inner terminal plate 151 and a second terminal pillar 152 of the second terminal 250.

Therefore, the following description will focus on the first outer terminal plate 233 and the second outer terminal plate 253 of the secondary battery 200, which are different from those of the secondary battery 100 described above.

The first outer terminal plate 233 may include a plate-shaped first main body 233x and a first protrusion 233y protruding outwardly from the first main body 233x.

The first main body 233x may be similar to the first outer terminal plate 133 of the secondary battery 100 shown in FIGS. 2A to 2C. The first main body 233x and the first protrusion 233y may be made of integral aluminum or an aluminum alloy (e.g., may be integrally formed and made of aluminum or an aluminum alloy).

The length of the first protrusion 233y in a first direction (e.g., the x direction), which is a longitudinal direction of the first cap plate 171, may be equal to or smaller than that of the first main body 233x. In addition, the length of the first protrusion 233y in a second direction (e.g., the y direction), which is a widthwise direction of the first cap plate 171, may be smaller than that of the first main body 233x. In the first outer terminal plate 233, the first main body 233x may be located on both sides of (e.g., may extend from both sides of) the first protrusion 233y in the second direction. The first protrusion 233y may extend in the first direction from the outer surface of the first main body 233x.

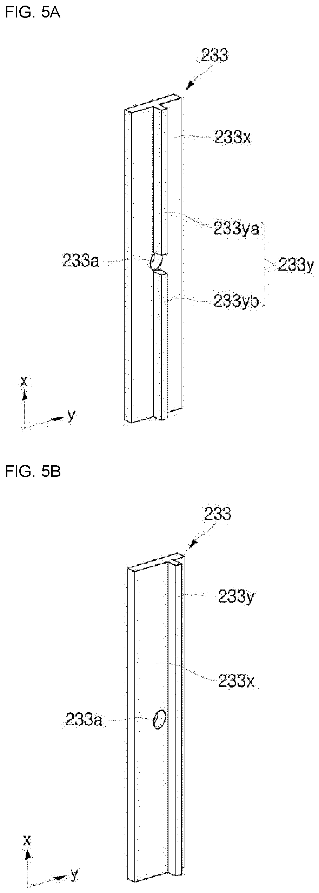

As an example, referring to FIG. 5A, the first protrusion 233y may extend in the first direction along a center line that is at approximately the center of the first main body 233x in the second direction. In such an embodiment, the first protrusion 233y may have two upper and lower protrusions spaced apart from each other at an area where the terminal hole 233a is formed in the first outer terminal plate 233. For example, the first protrusion 233y may have a first upper protrusion 233ya positioned at an upper portion and a first lower protrusion 233yb positioned at a lower portion with respect to the terminal hole 233a. In such an embodiment, the length of the first protrusion 233y in the first direction, which is the longitudinal direction of the first cap plate 171, may be smaller than that of the first main body 233x.

As another example, referring to FIG. 5B, the first protrusion 233y may be more adjacent to (or nearer to) one side or the other side of the first main body 233x in the second direction (e.g., the y direction) and may extend in the first direction (e.g., the x direction). In such an embodiment, the first protrusion 233y may have the same length as the first main body 233x in the first direction, which is the longitudinal direction of the first cap plate 171.

In addition, the second outer terminal plate 253 may include a second main body 253x and a second protrusion 253y protruding outwardly from the second main body 253x. The second outer terminal plate 253 may be the same as the first outer terminal plate 233 in terms of shape and structure. However, the second outer terminal plate 253 may be coupled to the second cap assembly 180 to be symmetrical with the first outer terminal plate 233 with respect to the electrode assembly 110. The second outer terminal plate 253 may be made of aluminum or an aluminum alloy.

In the secondary battery 200, the first outer terminal plate 233 of the first terminal 230 and the second outer terminal plate 253 of the second terminal 250 may be made of the same metal. In addition, in the battery module 20, two secondary batteries 200 may be electrically connected to each other in series. The two secondary batteries 200 included in the battery module 20 may have the same structure. For convenience of description, in the following description, one secondary battery in the battery module 20 will be referred to as the first secondary battery 200 and the other secondary battery will be referred to as the second secondary battery 200'.

Therefore, in the battery module 20 in which the two secondary batteries 200 and 200' are connected together in series, the secondary batteries 200 and 200' may be connected together in series by direct welding in a state in which the first protrusion 233y of the first outer terminal plate 233 of the first terminal 230 of the first secondary battery 200 and the second protrusion 253y' of the second outer terminal plate of the second terminal 250' of the second secondary battery 200' are in contact with and overlap each other. In one embodiment, the first protrusion 233y may have an end in contact with the second main body 253x' of the second terminal 250' of the second secondary battery 200', and the second protrusion 253y' may have an end in contact with the first main body 233x of the first outer terminal plate 233 of the first terminal 230 of the first secondary battery 200.

For example, the two secondary batteries 200 and 200' may be connected to each other in series and coupled by welding along the first direction of the first and second protrusions 233y and 253y'. In the above-described battery module 20, the surfaces of the first and second protrusions 233y and 253y' extending along the first direction x are face-to-face coupled to each other by welding, and thus, contact resistance therebetween is reduced by increasing the welding area.

As described above, in the secondary battery and the battery module including the same according to embodiments of the present invention, terminals of two secondary batteries are directly welded together in a state of being in face-to-face contact, thereby reducing electrical contact resistance therebetween and without using electrical connection parts.

The foregoing embodiments of the secondary battery and the battery module including the same have been describes as examples of the present invention. It should be understood, however, that the embodiments described herein should be considered in a descriptive sense and not for purposes of limitation, and various changes in form and details may be made therein without departing from the scope of the present invention as defined by the following claims and their equivalents.

It is clear for one of ordinary skill in the art that the disclosed embodiments can be combined where possible.

## Claims

1. A secondary battery (200, 200') comprising:
an electrode assembly (110) comprising a first electrode tab (111a) and a second electrode tab (112a) exposed at opposite sides of the electrode assembly (110);
a case (160) accommodating the electrode assembly (110) and having a side-opening (161, 162) at opposite sides thereof;
a first cap plate (171) sealing a one side-opening (161, 162) in the case (160);
a first terminal (130, 230) electrically connected to the first electrode tab (111a) and exposed to the outside of the first cap plate (171), the first terminal (130, 230) having a first protrusion (133y, 233y) that protrudes outwardly;
a second cap plate (181) sealing the other side-opening (161, 162) in the case (160);
and
a second terminal (150, 150', 250, 250') electrically connected to the second electrode tab (112a) and exposed to the outside of the second cap plate (181), the second terminal (150, 150', 250, 250') having a second protrusion (153y', 253y, 253y') that protrudes outwardly.

2. The secondary battery (200, 200') of claim 1, wherein the first terminal (130, 230) comprises:
a first inner terminal plate (131) under the first cap plate (171);
a first outer terminal plate (133, 233) over the first cap plate (171) and having a plate-shaped first main body (133x, 233x) and the first protrusion (133y, 233y) protruding outwardly from the first main body (133x, 233x); and
a first terminal pillar (132) rivet-coupled to the first inner terminal plate (131) from under the first cap plate (171) and extending through the first cap plate (171) and coupled to the first outer terminal plate (133, 233) from over the first cap plate (171) by rivet-coupling and/or welding.

3. The secondary battery (200, 200') of claim 2, wherein the first outer terminal plate (133, 233) is made of the same metal as the second terminal (150, 150', 250, 250') and is made of a different metal than the first inner terminal plate (131).

4. The secondary battery (200, 200') of claim 2 or 3, wherein the second terminal (150, 150', 250, 250') comprises:
a second inner terminal plate (151) under the second cap plate (181);
a second outer terminal plate (153, 153', 253) over the second cap plate (181) and having a plate-shaped second main body (253x, 253x') and the second protrusion (153y', 253y, 253y') protruding outwardly from the second main body (253x, 253x'); and
a second terminal pillar (152) coupled to the second inner terminal plate (151) by riveting and/or welding from under the second cap plate (181), extending through the second cap plate (181), and coupled to the second outer terminal plate (153, 153', 253) by riveting and/or welding from over the second cap plate (181).

5. The secondary battery (200, 200') of claim 4, wherein the second inner terminal plate (151), the second outer terminal plate (153, 153', 253), and the second terminal pillar (152) are made of the same metal.

6. The secondary battery (200, 200') of claim 4 or 5, wherein the first protrusion (133y, 233y) is at the center of the first outer terminal plate (133, 233) in a first direction,
wherein the second protrusion (153y', 253y, 253y') is at the center of the second outer terminal plate (153, 153', 253) in the first direction, and
wherein the first direction is a longitudinal direction of the first cap plate (171) and the second cap plate (181).

7. The secondary battery (200, 200') of any one of claims 4 to 6, wherein the first protrusion (133y, 233y) has a smaller length in the first direction than the first outer terminal plate (133, 233) and a length in a second direction equal to the first outer terminal plate (133, 233), the second direction being a widthwise direction of the first cap plate (171) and the second cap plate (181) and perpendicular to the first direction, and
wherein the second protrusion (153y', 253y, 253y') has a smaller length in the first direction than the second outer terminal plate (153, 153', 253) and a length in the second direction equal to the second outer terminal plate (153, 153', 253).

8. The secondary battery (200, 200') of any one of claims 4 to 7, wherein in the first outer terminal plate (133, 233) and the second outer terminal plate (153, 153', 253), the first main body (133x, 233x) and the second main body (253x, 253x') extend beyond both sides in a first direction from the first protrusion (133y, 233y) and the second protrusion (153y', 253y, 253y').

9. The secondary battery (200, 200') of any one of claims 4 to 8, wherein the first protrusion (133y, 233y) and the second protrusion (153y', 253y, 253y') extend in a first direction so that the lengths thereof in the first direction are equal to or smaller than those of the first outer terminal plate (133, 233) and the second outer terminal plate (153, 153', 253), and
wherein the first direction is a longitudinal direction of the first cap plate (171) and the second cap plate (181).

10. The secondary battery (200, 200') of any one of claims 4 to 9, wherein the first protrusion (133y, 233y) and the second protrusion (153y', 253y, 253y') are at the center of the first outer terminal plate (133, 233) and the second outer terminal plate (153, 153', 253) in a second direction, respectively, and
wherein the second direction is a widthwise direction of the first cap plate (171) and the second cap plate (181).

11. The secondary battery (200, 200') of any one of claims 4 to 10, wherein in the first outer terminal plate (133, 233) and the second outer terminal plate (153, 153', 253), the first main body (133x, 233x) and the second main body (253x, 253x') extend beyond both sides in a second direction from the first protrusion (133y, 233y) and the second protrusion (153y', 253y, 253y').

12. A battery module (10, 20) comprising a plurality of the secondary batteries (200, 200') according to any one of the preceding claims,
wherein first and second ones of the secondary batteries (200, 200') are connected to each other in series by welding in a state in which outer surfaces (133o) of the first terminal (130, 230) of the first one of the secondary batteries (200, 200') and the second terminal (150, 150', 250, 250') of the second one of the secondary batteries (200, 200') are in contact with each other.

13. The battery module (10, 20) of claim 12, wherein the first terminal (130, 230) of the first one of the secondary batteries (200, 200') comprises a first outer terminal plate (133, 233) exposed to outside of the first cap plate (171), and
wherein the second terminal (150, 150', 250, 250') of the second one of the secondary batteries (200, 200') comprises a second outer terminal plate (153, 153', 253) exposed to outside of the second cap plate (181).

14. The battery module (10, 20) of claim 13, wherein the first outer terminal plate (133, 233) comprises a flat plate-shaped first main body (133x, 233x) and the first protrusion (133y, 233y) protruding outwardly from the first main body (133x, 233x), and
wherein the second outer terminal plate (153, 153', 253) comprises a flat plate-shaped second main body (253x, 253x') and the second protrusion (153y', 253y, 253y') protruding outwardly from the second main body (253x, 253x').

15. The battery module (10, 20) of claim 13 or 14, wherein the first protrusion (133y, 233y) and the second protrusion (153y', 253y, 253y') are coupled to each other by welding in a state in which the second protrusion (153y', 253y, 253y') of the second outer terminal plate (153, 153', 253) of the second one of the secondary batteries (200, 200') is in contact with the first protrusion (133y, 233y) of the first outer terminal plate (133, 233) of the first one of the secondary batteries (200, 200').
